# EUROPEAN PATENT APPLICATION

(11) **EP 4 811 450 A1**
(43) Date of publication of application: **23.09.2026**
(21) Application number: 26154008.2
(22) Date of filing: 26.01.2026
(51) Int. Cl.: H01M 4/38, H01M 10/0525, H01M 10/0562, H01M 4/1395, H01M 4/36

(54) **PARTICULATE ELECTRODE ACTIVE MATERIAL-SOLID ELECTROLYTE COMPOSITE AND METHOD FOR PRODUCING SAME, ELECTRODE MIXTURE, AND BATTERY**

(30) Priority: 17.03.2025 JP 2025042409
(71) Applicant: Toyota Jidosha Kabushiki Kaisha, Toyota-shi, Aichi-ken 471-8571 (JP)
(72) Inventor: Nomoto, Kazushige, Toyota-shi, Aichi-ken,, 471-8571 (JP)
(74) Representative: Winter, Brandl - Partnerschaft mbB

(57) **Abstract**

The present disclosure provides particulate electrode active material-solid electrolyte composite capable of suppressing reaction resistance of a battery, a method for producing the same, an electrode mixture including such particulate composite, and a battery including such an electrode mixture. The particulate electrode active material-solid electrolyte composite of the present disclosure includes a core portion having one or more solid electrolyte particles and a shell portion having a plurality of electrode active material particles. The method of the present disclosure for producing particulate electrode active material-solid electrolyte composite includes mixing the plurality of the electrode active material particles formed into a composite with one or more solid electrolyte particles, and in the method of the present disclosure, the solid content ratio of the slurry is 25 mass% or less.

## Description

### TECHNICAL FIELD

The present disclosure relates to particulate electrode active material-solid electrolyte composite, a method for producing the same, an electrode mixture, and a battery.

### BACKGROUND

As disclosed in PTL 1 and PTL 2, electrode active material particles (hereinafter, sometimes referred to as "particulate electrode active material composites" in the present disclosure) formed into a composite by granulation or the like are known.

### [CITATION LIST]

### [PATENT LITERATURE]

[PTL 1] Japanese Unexamined Patent Publication (Kokai) No. 2019-021571
[PTL 2] Japanese Unexamined Patent Publication (Kokai) No. 2024-034018

### SUMMARY

### [TECHNICAL PROBLEM]

In a battery including particulate electrode active material composites, there is room for improvement in the reaction resistance thereof, i.e., suppression of an impedance component related to transfer of charges (charge transfer) at an interface between an electrode active material and a solid electrolyte.

An object of the present disclosure is to provide particulate electrode active material-solid electrolyte composite capable of suppressing reaction resistance of a battery, a method for producing the same, an electrode mixture including such particulate composite, and a battery including such an electrode mixture.

The present inventors have found that this object can be achieved by the following means.

### <Aspect 1>

Particulate electrode active material-solid electrolyte composite, including:
a core portion having one or more solid electrolyte particles; and
a shell portion having a plurality of electrode active material particles.

### <Aspect 2>

The particulate composite according to aspect 1, wherein the shell portion covers 50% or more of a perimeter of the core portion in a cross-sectional image.

### <Aspect 3>

The particulate composite according to aspect 1 or 2, wherein the electrode active material particles include alloy-based electrode active material particles.

### <Aspect 4>

The particulate composite according to aspect 3, wherein the alloy-based electrode active material particles include silicon particles.

### <Aspect 5>

An electrode mixture including the particulate composite according to any one of aspects 1 to 4.

### <Aspect 6>

A battery having an electrode active material layer, wherein
the electrode active material layer contains the electrode mixture according to aspect 5.

### <Aspect 7>

The battery according to aspect 6, the battery being a solid-state battery further having an electrolyte layer, wherein
the electrolyte layer includes a solid electrolyte.

### <Aspect 8>

A method for producing the particulate composite according to any one of aspects 1 to 4, the method including:
providing a slurry including a plurality of electrode active material particles and a dispersion medium;
drying and removing the dispersion medium by spray drying to form a plurality of the electrode active material particles into a composite; and
mixing the plurality of the electrode active material particles formed into a composite with one or more solid electrolyte particles, wherein
a solid content of the slurry is 25 mass% or less.

### [ADVANTAGEOUS EFFECTS OF INVENTION]

According to the present disclosure, it is possible to provide particulate electrode active material-solid electrolyte composite capable of suppressing reaction resistance of a battery, a method for producing the same, an electrode mixture including such particulate composite, and a battery including such an electrode mixture.

### BRIEF DESCRIPTION OF DRAWINGS

Fig. 1 is a secondary electron image of particulate composite of Examples.
Fig. 2 is a secondary electron image of a cross section of an electrode active material layer formed of an electrode mixture including particulate composite of Examples.
Fig. 3 is a backscattered electron image of a cross section of an electrode active material layer formed of an electrode mixture including particulate composite of Examples.
Fig. 4 is a secondary electron image of particulate composite of Comparative Examples.
Fig. 5 is a secondary electron image of a cross section of an electrode active material layer formed of an electrode mixture including particulate composite of Comparative Examples.
Fig. 6 is a backscattered electron image of a cross section of an electrode active material layer formed of an electrode mixture including particulate composite of Comparative Examples.

### DESCRIPTION OF EMBODIMENTS

Hereinafter, embodiments of the present disclosure will be described in detail. However, it should be noted that the present disclosure is not limited to the following embodiments, and can be variously modified within the scope thereof.

### <<Particulate Electrode Active Material-Solid Electrolyte Composite>>

The particulate electrode active material-solid electrolyte composite of the present disclosure includes a core portion having one or more solid electrolyte particles and a shell portion having a plurality of electrode active material particles.

The present inventors have found that the reaction resistance is not sufficiently suppressed in a battery containing a known particulate electrode active material composite. The reason for this is not intended to be bound by any theory, but is presumed to be as follows. Specifically, in a battery including a known particulate electrode active material composite and a solid electrolyte particle in an electrode mixture, the reaction area between the electrode active material particle and the solid electrolyte particle, i.e., the area of the interface between the electrode active material particle and the solid electrolyte particle is small, and thus the reaction resistance is considered to be large.

In contrast, the present inventors have found that specific particulate electrode active material-solid electrolyte composite can suppress the reaction resistance of the battery. The reason for this is not intended to be bound by any theory, but is presumed to be as follows. Specifically, the particulate composite of the present disclosure has a core portion having one or more solid electrolyte particles and a shell portion having a plurality of electrode active material particles and differs from the known particulate electrode active material composite particularly in the cross-sectional structure. Accordingly, it is considered that the reaction area between the electrode active material particles and the solid electrolyte particles increases, and thus the reaction resistance can be suppressed.

In the present disclosure, the term "particulate electrode active material-solid electrolyte composite" may be simply referred to as "particulate composite".

Hereinafter, each element constituting the particulate composite of the present disclosure will be described.

### <Core Portion>

The particulate composite of the present disclosure includes a core portion having one or more solid electrolyte particles.

### (Solid Electrolyte Particles)

The core portion has one or more solid electrolyte particles.

Examples of the solid electrolyte particles include particles of inorganic solid electrolytes such as a sulfide solid electrolyte, an oxide solid electrolyte, a nitride solid electrolyte, and a halide solid electrolyte, and organic polymer electrolytes such as a polymer electrolyte. The solid electrolyte particles may be, in particular, sulfide solid electrolyte particles.

For example, when the battery is a lithium ion secondary battery, the solid electrolyte may have lithium ionic conductivity.

Examples of the sulfide solid electrolyte having lithium ionic conductivity include a solid electrolyte containing a Li element, an X element (X represents at least one of P, As, Sb, Si, Ge, Sn, B, Al, Ga, and In), and a S element. The sulfide solid electrolyte may further contain at least one of an O element and a halogen element. Examples of the halogen element include an F element, a Cl element, a Br element, and an I element.

Examples of the sulfide solid electrolyte include Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₃-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZmSn (where m and n are positive numbers; and Z represents any of Ge, Zn, and Ga), Li₂S-GeS₂, Li₂S-SiS₂-Li₃PO₄, and Li₂S-SiS₂-LiₓMO_{y} (where x and y are positive numbers; and M represents any one of P, Si, Ge, B, Al, Ga, and In).

In addition, examples of the oxide solid electrolyte having lithium ionic conductivity include a solid electrolyte containing a Li element, a Y element (Y represents at least one of Nb, B, Al, Si, P, Ti, Zr, Mo, W, and S), and an O element. Specific examples thereof include garnet-type solid electrolytes such as Li₇La₃Zr₂O₁₂, Li₇₋ₓLa₃(Zr₂₋ₓNbₓ)O₁₂ (0≤x≤2), and Li₅La₃Nb₂O₁₂; perovskite-type solid electrolytes such as (Li,La)TiO₃, (Li,La)NbO₃, and (Li,Sr)(Ta,Zr)O₃; nasicon-type solid electrolytes such as Li(Al,Ti)(PO₄)₃ and Li(Al,Ga)(PO₄)₃; Li-P-O-based solid electrolytes such as Li₃PO₄ and LIPON (compound in which part of O in Li₃PO₄ is substituted with N); and Li-B-O-based solid electrolytes such as Li₃BO₃ and a compound in which a part of O of Li₃BO₃ is substituted with C.

### (Additional Component)

The core portion may or may not contain a component other than the solid electrolyte particles.

### <Shell Portion>

The particulate composite of the present disclosure includes a shell portion having a plurality of electrode active material particles.

In the particulate composite of the present disclosure, the shell portion may cover 50% or more of the perimeter of the core portion in the cross-sectional image. This can effectively suppress the reaction resistance of the battery.

In the cross-sectional image, the shell portion may cover 60% or more, 70% or more, 80% or more, 90% or more, 95% or more, or 100% of the perimeter of the core portion.

The cross-sectional image is not particularly limited, and may be, for example, a secondary electron image, a backscattered electron image, or the like.

The secondary electron image and backscattered electron image may be images of a cross section of the particulate composite itself or the electrode active material layer formed of the electrode mixture including the particulate composite with a scanning electron microscope (SEM), a transmission electron microscope (TEM), or the like.

In the present disclosure, the "electrode mixture" refers to a composition that can constitute an electrode active material layer as it is or by further containing other components. In the present disclosure, the "electrode mixture slurry" refers to a slurry that includes a dispersion medium in addition to the "electrode mixture" and can be applied and dried to form an electrode active material layer.

### (Electrode Active Material Particles)

The shell portion has a plurality of electrode active material particles. The electrode active material particles in the shell portion may each be a secondary particle formed by aggregation of a plurality of electrode active material particles, serving as primary particles. The electrode active material particles may each be a secondary particle formed by granulating a plurality of silicon particles.

In the present disclosure, the "electrode active material" may be a "positive electrode active material" or a "negative electrode active material", particularly a "negative electrode active material".

The electrode active material particles may include alloy-based electrode active material particles. The alloy-based electrode active material particles are not particularly limited, and may, for example, expand and contract during charging and discharging of the battery.

As a technique for alleviating the influence of such expansion and contraction, a technique is known for forming into secondary particles electrode active material particles that cause expansion and contraction . In this technique, voids can be formed inside the secondary particles, and thus the influence of expansion and contraction of the alloy-based electrode active material can be alleviated.

The present inventors have found that even when the alloy-based electrode active material particles are formed into secondary particles, the influence of expansion and contraction of the alloy-based electrode active material cannot be sufficiently alleviated in some cases. The reason for this is not intended to be bound by any theory, but is presumed as follows. Specifically, in a battery including a known electrode active material particle formed into a secondary particle and a solid electrolyte particle in an electrode mixture, the reaction area between the electrode active material particle and the solid electrolyte particle, i.e., the area of the interface between the electrode active material particle and the solid electrolyte particle is small, and thus the reaction resistance is considered to be large. As a result, it is considered that reaction unevenness occurs, causing the alloy-based electrode active material to undergo relatively large expansion and contraction locally, which may result in insufficient alleviation of the expansion and contraction of the alloy-based electrode active material.

On the other hand, the present inventors have found that even when specific particulate electrode active material-solid electrolyte composite contains an electrode active material that expands and contracts during charging and discharging of a battery, such an influence of expansion and contraction can be alleviated. The reason for this is not intended to be bound by any theory, but is presumed as follows. Specifically, the particulate composite of the present disclosure has a core portion having one or more solid electrolyte particles and a shell portion having a plurality of electrode active material particles and differs from a known particulate electrode active material composite particularly in the cross-sectional structure. Accordingly, it is considered that the reaction area between the electrode active material particles and the solid electrolyte particles increases, and thus the reaction resistance can be suppressed. Therefore, it is considered that the electrode reaction easily proceeds, and reaction unevenness causing local expansion and contraction of the electrode active material particles is less likely to occur.

The alloy-based electrode active material may be, for example, a silicon (Si) alloy-based electrode active material or a tin (Sn) alloy-based electrode active material, but is not limited thereto.

Examples of the Si alloy-based electrode active material include silicon, silicon oxide, silicon carbide, silicon nitride, and a solid solution thereof. In addition, the Si alloy-based electrode active material may contain elements other than silicon, for example, Fe, Co, Sb, Bi, Pb, Ni, Cu, Zn, Ge, In, Sn, and Ti.

Examples of the Sn alloy-based electrode active material include tin, tin oxide, tin nitride, and a solid solution thereof. The Sn alloy-based negative electrode active material may contain elements other than tin, for example, Fe, Co, Sb, Bi, Pb, Ni, Cu, Zn, Ge, In, Ti, and Si.

The alloy-based electrode active material may include silicon. Specifically, the alloy-based electrode active material particles may include silicon particles, and may particularly be silicon particles.

The silicon particles may be amorphous or crystalline. The crystal phase included in the silicon particles is not particularly limited.

The silicon particles may be porous silicon particles. Specifically, the silicon particles may each have a plurality of pores. As a result, expansion of silicon can be absorbed not only by voids in the particulate composite described later but also by the pores of the silicon particles. The number of pores, pore volume, pore diameter, and the like of the porous silicon particles are not particularly limited, and can be appropriately set in consideration of the magnitude of expansion and contraction of silicon and the like. The pore diameter may be, for example, on the order of nanometers.

The electrode active material particles may or may not include electrode active material particles other than the alloy-based electrode active material particles.

The content of the electrode active material particles in the shell portion is not particularly limited, and can be appropriately set in consideration of a desired battery capacity and the like.

The particle diameter, shape, and the like of the electrode active material particles are not particularly limited.

### (Binder)

The shell portion may further contain a binder. In this case, the electrode active material particles may each be a secondary particle in which a plurality of particles are bound to each other via a binder.

The binder is not particularly limited, and may be, for example, a rubber-based binder such as a butadiene rubber (BR)-based binder, a butylene rubber (IIR)-based binder, an acrylate butadiene rubber (ABR)-based binder, or a styrene butadiene rubber (SBR)-based binder; a fluoride-based binder such as a polyvinylidene fluoride (PVDF)-based binder or a polytetrafluoroethylene (PTFE)-based binder; a polymeric binder such as a polyimide (PI)-based binder, a carboxymethyl cellulose (CMC)-based binder, a polyacrylic acid salt-based binder, or a polyacrylic acid ester-based binder; or a combination thereof.

The binder may particularly be a PVDF-based binder. The PVDF-based binder may be a copolymer having a unit derived from a monomer other than VDF.

The content of the binder in the shell portion is not particularly limited and can be appropriately set in consideration of the desired binding properties and the like.

### (Additional Component)

The shell portion may further contain a component other than the above.

### <Additional Configuration>

The average particle diameter of the particulate composite may be, for example, 1 µm or more, 3 µm or more, 5 µm or more, or 10 µm or more, and may be 30 µm or less, 20 µm or less, 15 µm or less, or 10 µm or less. The average particle diameter can be determined by observation with an electron microscope such as a scanning electron microscope (SEM), and is determined as, for example, an average value of the maximum Feret diameters of a plurality of particles. The number of samples is preferably large, and may be, for example, 20 or more, 50 or more, or 100 or more. The average particle diameter can be appropriately adjusted by, for example, appropriately changing the production conditions of the particulate composite or performing a classification treatment.

The particulate composite has a plurality of voids. As described above, even in a case where the electrode active material is an electrode active material that expands and contracts due to charging and discharging of the battery, the voids can alleviate the influence of expansion and contraction.

The number of voids, porosity, size of the voids, and the like in the particulate composite is not particularly limited, and can be appropriately set in consideration of the desired capacity of the battery, magnitude of expansion and contraction of the electrode active material, and the like.

The particulate composite of the present disclosure can be produced by the following method.

### <<Method for Producing Particulate Electrode Active Material-Solid Electrolyte Composite>>

The method of the present disclosure for producing particulate electrode active material-solid electrolyte composite includes:
providing a slurry including a plurality of electrode active material particles and a dispersion medium;
drying and removing the dispersion medium by spray drying to form a plurality of the electrode active material particles into a composite; and
mixing the plurality of the electrode active material particles formed into a composite with one or more solid electrolyte particles.

In the method of the present disclosure, the solid content ratio of the slurry is 25 mass% or less.

The particulate composite produced by such a method can suppress the reaction resistance of the battery.

### <Provision of Slurry>

The method of the present disclosure includes providing a slurry containing a plurality of electrode active material particles and a solvent.

Reference may be made to the above description regarding the electrode active material particles.

The dispersion medium is not particularly limited, as long as the electrode active material particles can be dispersed therein.

The slurry may further contain a binder. In this case, the dispersion medium is not particularly limited, as long as it can disperse the electrode active material particles and dissolve or disperse the binder. Examples of such a dispersion medium include dimethyl carbonate.

Reference may be made to the above description regarding the binder.

### <Composite of Electrode Active Material Particles>

The method of the present disclosure includes drying and removing the dispersion medium by spray drying to form a plurality of the electrode active material particles into a composite. Specifically, in the method of the present disclosure, a plurality of electrode active material particles are formed into a composite by drying and removing the dispersion medium in the slurry by spray drying.

The drying temperature, spraying pressure of the slurry, liquid feed rate, and the like in the spray drying are not particularly limited, and can be appropriately set in consideration of the solid concentration of the slurry or the like.

The drying temperature may be, for example, 100°C or more, 130°C or more, 150°C or more, or 160°C or more, and may be 300°C or less, 250°C or less, 200°C or less, 180°C or less, 170°C or less, or 160°C or less. In such a case, the electrode active material particles formed into a composite are likely to have an appropriate shape as a shell portion.

The spray drying may be performed in a spray dryer into which an inert gas is introduced. Examples of the inert gas include, but are not limited to, nitrogen and argon.

### <Mixing of Various Particles>

The method of the present disclosure includes mixing a plurality of electrode active material particles formed into a composite with one or more solid electrolyte particles. The particulate composite of the present disclosure including a core portion having one or more solid electrolyte particles and a shell portion having a plurality of electrode active material particles can be produced by mixing a plurality of electrode active material particles formed into a composite with one or more solid electrolyte particles.

The mixing method is not particularly limited, and examples thereof include a method of kneading with an ultrasonic homogenizer. In this case, the kneading time is not particularly limited, and may be, for example, 3 minutes or more, 5 minutes or more, or 10 minutes or more, and may be 1 hour or less, 30 minutes or less, 20 minutes or less, 15 minutes or less, or 10 minutes or less. In such a case, the electrode active material particles formed into a composite are likely to have an appropriate shape as a shell portion.

### <Solid Content of Slurry>

In the method of the present disclosure, the solid content ratio of the slurry is 25 mass% or less. Accordingly, in the process of removing the dispersion medium, the electrode active material particles formed into a composite can be appropriately extended, and therefore, the composite electrode active material particles may have an appropriate shape as a shell portion.

The solid content ratio of the slurry may be 1 mass% or more, 3 mass% or more, 5 mass% or more, or 10 mass% or more, and may be 20 mass% or less, 15 mass% or less, or 10 mass% or less. As a result, the electrode active material particles formed into a composite may more effectively have an appropriate shape as a shell portion.

As described above, in the method of the present disclosure, the composite electrode active material particles can be controlled into an appropriate shape as a shell portion by changing the solid content ratio of the slurry, the drying rate adjusted under the drying conditions by spray drying, the dispersibility of solids in the slurry adjusted under the mixing conditions in the mixing step, and the like.

### <<Electrode Mixture>>

The electrode mixture of the present disclosure includes particulate electrode active material-solid electrolyte composite. The electrode mixture may optionally further include a conductive additive, a binder, and the like. Optional components such as a conductive additive and a binder may be contained in the core portion of the particulate composite together with the solid electrolyte particles.

In the present disclosure, the "electrode mixture" may be a "positive electrode mixture" or a "negative electrode mixture", particularly a "negative electrode mixture".

### <Particulate Electrode Active Material-Solid Electrolyte Composite>

Reference may be made to the above description regarding the particulate electrode active material-solid electrolyte composite.

The content of the particulate composite in the electrode mixture is not particularly limited, and can be appropriately set in consideration of a desired battery capacity and the like.

### <Conductive Additive>

The conductive additive may be, for example, a carbon material, metal particles, or a combination thereof. The carbon material may be, for example, a non-fibrous carbon material such as acetylene black (AB) or Ketjenblack (KB); a fibrous carbon material such as vapor-grown carbon fiber (VGCF), carbon nanotube (CNT), or carbon nanofiber (CNF); or a combination thereof. The metal particles may be, for example, nickel, copper, iron, stainless steel, or a combination thereof.

The content of the conductive additive in the electrode mixture is not particularly limited, and can be appropriately set in consideration of the desired conductivity and the like.

### <Binder>

The binder contained in the electrode mixture may be the same as or different from the binder for forming the particulate composite. The binder may be, for example, a rubber-based binder such as butadiene rubber, hydrogenated butadiene rubber, styrene-butadiene rubber (SBR), hydrogenated styrene-butadiene rubber, nitrile-butadiene rubber, hydrogenated nitrile-butadiene rubber, acrylate-butadiene rubber (ABR), or ethylene-propylene rubber; a fluoride-based binder such as polyvinylidene fluoride (PVDF), a polyvinylidene fluoride-polyhexafluoropropylene copolymer (PVDF-HFP), polytetrafluoroethylene, or fluororubber, a polyolefin-based thermoplastic resin such as polyethylene, polypropylene, or polystyrene, an imide-based resin such as polyimide or polyamide-imide; an amide-based resin such as polyamide; an acrylic-based resin such as polymethyl acrylate or polyethyl acrylate; a methacrylic-based resin such as polymethyl methacrylate or polyethyl methacrylate; or a combination thereof.

The content of the binder in the electrode mixture is not particularly limited and can be appropriately set in consideration of the desired binding properties and the like.

### <Additional Component>

The electrode mixture may or may not further contain a component other than the above.

### <<Battery>>

The battery of the present disclosure has an electrode active material layer, and the electrode active material layer contains the electrode mixture of the present disclosure. The battery of the present disclosure may include a negative electrode current collector layer, a negative electrode active material layer, an electrolyte layer, a positive electrode active material layer, and a positive electrode current collector layer in this order. In this case, the electrode active material layer containing the electrode mixture of the present disclosure may be a negative electrode active material layer or a positive electrode active material layer, particularly a negative electrode active material layer.

The battery of the present disclosure may be a liquid-based battery or a solid-state battery. In the present disclosure, a "solid-state battery" means a battery including at least a solid electrolyte as an electrolyte, and therefore the solid-state battery may include a combination of a solid electrolyte and a liquid electrolyte as an electrolyte. The battery of the present disclosure may particularly be a solid-state battery in which the electrolyte layer contains a solid electrolyte. The solid-state battery may be an all-solid-state battery, i.e., a battery using only a solid electrolyte as the electrolyte.

The battery of the present disclosure may be a primary battery or a secondary battery, particularly a lithium ion secondary battery.

The battery of the present disclosure may be restrained by a restraint member, such as an end plate, from both sides in the stacking direction of the layers. Examples of the restraint method include, but are not limited to, a method using the restraint torque of the bolt.

Hereinafter, each element constituting the battery of the present disclosure will be described. In particular, a case wherein the battery of the present disclosure is an all-solid-state battery and the electrode active material layer containing the electrode mixture of the present disclosure is a negative electrode active material layer will be described below as an example.

### <Negative Electrode Current Collector Layer>

The negative electrode current collector layer may have a foil shape, a plate shape, a mesh shape, a perforated metal shape, a foam, or the like. The negative electrode current collector layer may be a metal foil, a metal mesh, or a carbon sheet, particularly a metal foil. The negative electrode current collector layer may be made of a plurality of foils, sheets, or the like.

The metal constituting the negative electrode current collector layer is not particularly limited, and may be, for example, copper, nickel, chromium, gold, platinum, silver, aluminum, iron, titanium, zinc, cobalt, stainless steel, or the like. In particular, the negative electrode current collector layer may contain at least one metal selected from copper, nickel, and stainless steel.

For the purpose of adjusting the resistance, a coating layer of some kind may be formed on the surface of the negative electrode current collector layer. The negative electrode current collector layer may be a metal foil or a substrate on which the above metal is plated or vapor-deposited. In addition, when the negative electrode current collector layer is composed of a plurality of metal foils, some layer may be provided between the plurality of metal foils.

The thickness of the negative electrode current collector layer is not particularly limited, and may be, for example, 0.1 µm or more, or 1 µm or more, and may be 1 mm or less, or 100 µm or less.

### <Negative Electrode Active Material Layer>

The negative electrode active material layer includes the electrode mixture of the present disclosure. Reference may be made to the above description regarding the electrode mixture of the present disclosure. The negative electrode active material layer may be formed by shaping the electrode mixture of the present disclosure itself into a layer.

The thickness of the negative electrode active material layer is not particularly limited, and may be, for example, 0.1 µm or more and 1000 µm or less.

### <Solid Electrolyte Layer>

The solid electrolyte layer includes at least solid electrolyte particles and may optionally further include a binder and the like.

Reference may be made to the above description regarding the solid electrolyte particles and the binder.

The thickness of the solid electrolyte layer is not particularly limited, and may be, for example, 0.1 µm or more and 1000 µm or less.

### <Positive Electrode Active Material Layer>

The positive electrode active material layer includes at least a positive electrode active material, and may optionally further include a solid electrolyte, a conductive additive, a binder, and the like.

The positive electrode active material is not particularly limited, and may be, for example, an oxide active material. The oxide active material used in the lithium ion battery may be, for example, LiCoO₂, LiMnO₂, Li₂NiMn₃O₈, LiVO₂, LiCrO₂, LiFePO₄, LiCoPO₄, LiNiO₂, LiNi_{1/3}Co_{1/3}Mn_{1/3}O₂, or the like. A coating layer containing a Li-ion conductive oxide such as LiNbO₃ may be formed on the surface of the active material.

The content of the positive electrode active material in the positive electrode active material layer is not particularly limited.

Reference may be made to the above description regarding the solid electrolyte, conductive additive, and binder.

The thickness of the positive electrode active material layer is not particularly limited, and may be, for example, 0.1 µm or more and 1000 µm or less.

### <Positive Electrode Current Collector Layer>

The positive electrode current collector layer may have a foil shape, a plate shape, a mesh shape, a perforated metal shape, a foam, or the like. The positive electrode current collector layer may be a metal foil or a metal mesh, particularly a metal foil. The positive electrode current collector layer may be made of a plurality of foils.

The metal constituting the positive electrode current collector layer may be copper, nickel, chromium, gold, platinum, silver, aluminum, iron, titanium, zinc, cobalt, stainless steel, or the like, and in particular, the positive electrode current collector layer may contain aluminum.

For the purpose of adjusting the resistance, a coating layer of some kind may be formed on the surface of the positive electrode current collector layer. The positive electrode current collector layer may be a metal foil or a substrate on which the metal is plated or vapor-deposited. In addition, when the positive electrode current collector layer is composed of a plurality of metal foils, some layer may be provided between the plurality of metal foils.

The thickness of the positive electrode current collector layer is not particularly limited, and may be, for example, 0.1 µm or more, or 1 µm or more, and may be 1 mm or less, or 100 µm or less.

### <Additional Configuration>

The battery may be one in which each of the above-described configurations is housed inside the outer package. As the outer package, any known outer package of a battery can be adopted. A plurality of batteries may be electrically connected to each other as desired, or may be stacked on each other as desired to form a battery pack. In this case, the battery pack may be housed in a known battery case. The battery may further have an obvious configuration such as a necessary terminal. The shape of the battery may be, for example, a coin shape, a laminate (pouch) shape, a cylindrical shape, a square shape, or the like.

The method for producing the battery of the present disclosure is not particularly limited, and includes, for example, forming an electrode active material layer containing the electrode mixture of the present disclosure.

Examples of the method of forming the electrode active material layer containing the electrode mixture include a method of mixing constituent materials such as particulate composite to obtain an electrode mixture, the obtained electrode mixture being subjected to dry molding or wet molding.

The method for producing a battery of the present disclosure may further include forming an electrode laminate by laminating a negative electrode current collector layer, a negative electrode active material layer, a solid electrolyte layer, a positive electrode active material layer, and a positive electrode current collector layer in this order.

Other members such as a terminal are attached to the electrode laminate, if necessary. The electrode laminate is housed in a battery case and sealed to obtain a battery.

### EXAMPLES

### <<Example>>

### <Production of Particulate Electrode Active Material-Solid Electrolyte Composite>

### (Provision of Slurry)

Silicon (Si) particles, serving as electrode active material particles, were dispersed in a solution obtained by dissolving or dispersing polyvinylidene fluoride (PVDF) as a binder in dimethyl carbonate as a dispersion medium to prepare a slurry.

### (Composite of Electrode Active Material Particles)

The dimethyl carbonate in the resulting slurry was dried and removed at 160°C by spray drying to form the Si particles into a composite.

### (Mixing of Various Particles)

A binder, a conductive additive, solid electrolyte particles, and Si particles formed into a composite were added to an organic solvent, and the mixture was kneaded for 10 minutes with an ultrasonic homogenizer. Thus, an electrode mixture slurry was obtained. It was confirmed by the evaluation described later that the obtained electrode mixture slurry contained particulate electrode active material-solid electrolyte composite including a core portion having a plurality of solid electrolyte particles and a shell portion having a plurality of electrode active material particles.

### <Production of Negative Electrode Active Material Layer>

The obtained electrode mixture slurry was applied to a copper (Cu) foil as a negative electrode current collector layer, and an organic solvent was removed by drying to prepare a negative electrode active material layer. Specifically, in this example, an electrode active material layer formed of electrode mixture containing the particulate composite of the present disclosure was used as a negative electrode active material layer. Thus, a negative electrode laminate in which the negative electrode current collector layer and the negative electrode active material layer were laminated was obtained and formed into a strip shape.

### <Production of Solid Electrolyte Layer>

A binder and solid electrolyte particles were added to an organic solvent to prepare a mixed solution. The mixed solution was kneaded using an ultrasonic homogenizer to obtain a solid electrolyte mixture slurry. The obtained solid electrolyte mixture slurry was applied to an aluminum (Al) foil as a release sheet, and an organic solvent was removed by drying to prepare a solid electrolyte layer. A total of three solid electrolyte layers were produced in the same procedure and formed into a strip shape.

### <Production of Positive Electrode Active Material Layer>

A binder, conductive additive, solid electrolyte particles, and LiNi_{0.8}Co_{0.15}Mn_{0.05}O₂ as a positive electrode active material were added to an organic solvent to prepare a mixed solution. The mixed solution was kneaded using an ultrasonic homogenizer to obtain a positive electrode mixture slurry. The obtained positive electrode mixture slurry was applied to an Al foil as a positive electrode current collector layer, and an organic solvent was removed by drying to prepare a positive electrode active material layer. Thus, a positive electrode laminate in which the positive electrode current collector layer and the positive electrode active material layer were laminated was obtained, and the positive electrode laminate was formed into a strip shape.

### <Production of Battery>

The negative electrode laminate and the first solid electrolyte layer were laminated so that the negative electrode active material layer and the solid electrolyte layer faced each other, and roll-pressed at 25°C and a pressure of 50 kN/cm. The solid electrolyte layer was transferred onto the negative electrode active material layer by peeling off the Al foil as a release sheet from the solid electrolyte layer.

The positive electrode laminate and the second solid electrolyte layer were laminated so that the positive electrode active material layer and the solid electrolyte layer faced each other, and roll-pressed at 165°C and a pressure of 50 kN/cm. The solid electrolyte layer was transferred onto the positive electrode active material layer by peeling off the Al foil as a release sheet from the solid electrolyte layer.

The negative electrode laminate to which the solid electrolyte layer was transferred and the positive electrode laminate to which the solid electrolyte layer was transferred were punched with a punching machine having a size of φ 13.00 mm and φ 11.28 mm, respectively.

The third solid electrolyte layer punched out to a predetermined size was further transferred onto the first solid electrolyte layer laminated on the negative electrode active material layer using a uniaxial press machine. The negative electrode laminate and the positive electrode laminate were laminated so that the solid electrolyte layer on the negative electrode active material layer and the solid electrolyte layer on the positive electrode active material layer faced each other, thereby obtaining an electrode laminate.

A current extraction tab was attached to the positive electrode active material layer and the negative electrode active material layer, and the resulting electrode laminate was sealed in an Al laminate using a vacuum laminate sealer and restrained at a pressure of 5 MPa to produce an all-solid-state battery.

### <Evaluation>

### (Observation of Cross-Sectional Image of Particulate Electrode Active Material-Solid Electrolyte Composite)

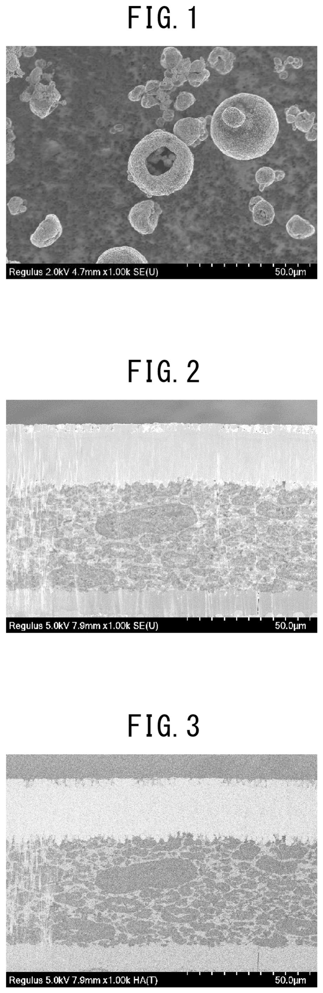

A secondary electron image and a backscattered electron image were imaged on the cross section of the obtained electrode mixture slurry and electrode active material layer using a scanning electron microscope (SEM). The obtained cross-sectional images are shown in Figs. 1 to 3, and the presence or absence of a core-shell structure in the particulate composite confirmed in these cross-sectional images is listed in Table 1.

### (Reaction Resistance)

The voltage was adjusted to 3.7 V, the diameter of the arc component of the obtained all-solid-state battery was measured by an AC impedance method and evaluated as the reaction resistance of the battery. The results are shown in Table 1. The values listed in Table 1 are relative values with the value of Comparative Examples described later being 1.0.

### <<Comparative Example>>

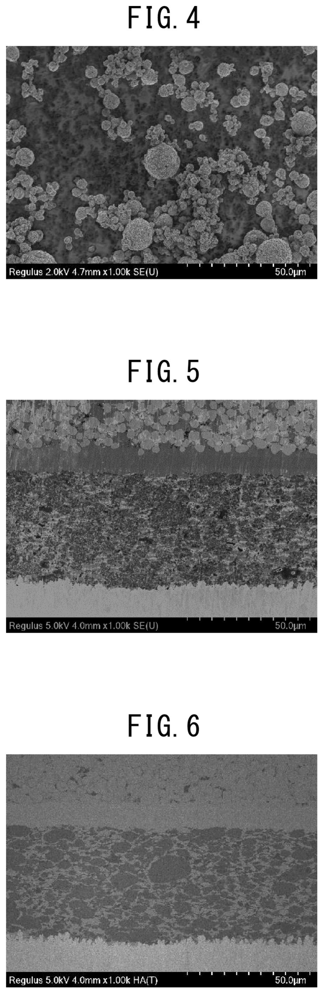

Particulate composite and batteries of Comparative Examples were produced and evaluated in the same manner as in Examples except that the solid content of the slurry, drying temperature by spray drying, and kneading time of the composite electrode active material particles and solid electrolyte particles were changed as listed in Table 1 in the production of the particulate electrode active material-solid electrolyte composite. The obtained cross-sectional images are shown in Figs. 4 to 6, and the presence or absence of a core-shell structure in the particulate composite confirmed in these cross-sectional images is listed in Table 1. The evaluation results of the reaction resistance are shown in Table 1.

### [Table 1]

**Table 1**

| | Solid content [mass%] | Drying temperature [°C] | Kneading time [min] | Presence or absence of core-shell structure | Reaction resistance [-] |
|---|---|---|---|---|---|
| Example | 10 | 160 | 10 | Present | 0.8 |
| Comparative Example | 30 | 90 | 2 | Absent | 1.0 |

As shown in Figs. 1 to 3, the particulate composite of Examples had a core-shell structure including a core portion having a plurality of solid electrolyte particles and a shell portion having a plurality of electrode active material particles. In the cross-sectional image, the shell portion covered 50% or more of the perimeter of the core portion. In contrast, as shown in Figs. 4 to 6, the particulate composite of Comparative Examples did not have such a core-shell structure.

As shown in Table 1, the batteries of Examples containing particulate composite having a core-shell structure had a low reaction resistance.

## Claims

1. Particulate electrode active material-solid electrolyte composite, including:
a core portion having one or more solid electrolyte particles; and
a shell portion having a plurality of electrode active material particles.

2. The particulate composite according to claim 1, wherein the shell portion covers 50% or more of a perimeter of the core portion in a cross-sectional image.

3. The particulate composite according to claim 1 or 2, wherein the electrode active material particles include alloy-based electrode active material particles.

4. The particulate composite according to claim 3, wherein the alloy-based electrode active material particles include silicon particles.

5. An electrode mixture including the particulate composite according to any one of claims 1 to 4.

6. A battery having an electrode active material layer, wherein
the electrode active material layer contains the electrode mixture according to claim 5.

7. The battery according to claim 6, the battery being a solid-state battery further having an electrolyte layer, wherein
the electrolyte layer includes a solid electrolyte.

8. A method for producing the particulate composite according to any one of claims 1 to 4, the method including:
providing a slurry including a plurality of electrode active material particles and a dispersion medium;
drying and removing the dispersion medium by spray drying to form a plurality of the electrode active material particles into a composite; and
mixing the plurality of the electrode active material particles formed into a composite with one or more solid electrolyte particles, wherein
a solid content of the slurry is 25 mass% or less.
